# EUROPEAN PATENT APPLICATION

(11) **EP 1 845 684 A1**
(43) Date of publication of application: **17.10.2007**
(21) Application number: 06251994.7
(22) Date of filing: 10.04.2006
(51) Int. Cl.: H04L 29/06, H04L 29/08

(54) **Content repurposing**

(71) Applicant: BRITISH TELECOMMUNICATIONS public limited company, London EC1A 7AJ (GB)
(72) Inventor: The designation of the inventor has not yet been filed

(57) **Abstract**

In order to transfer viewing of the same or related content between devices, for example between a mobile phone and a static device such as a television or PC, the static device is responsive to signalled metadata from the mobile device to access a server and content repository for related file information.

The metadata defines the related content and the position within that content currently reached by the transferring device so that, on transfer of content transmission, viewing commences from the same point.

## Description

The present invention relates to content repurposing and more particularly to repurposing stored files for display on differing devices on transfer of continuous playback on such devices.

There are many repositories for content accessible by way of mobile and fixed devices. These allow videos, pictures and music for example to be downloaded and played on devices such as mobile phones, ipods, pocket pcs, laptop computers and also on fixed devices such as desktop computers and televisions.

Each of these devices has differing capabilities and resolutions so that content files need to be re-purposed for the particular device and in some cases the receiving device is incapable of displaying the type of file available. Necessarily this requires the depository to determine the type of receiving device and its capabilities and to select appropriate types of content for delivery.

In US 2003/0014483 there is disclosed a content exchange system in which a repository stores content in a number of forms which can be managed and manipulated by a content exchange system. It includes mechanisms for converting stored content into different forms and for distributing the content through a network to various clients.

US2004/0059780 provides a method and system for transmitting content stored in different forms for the purpose of sending selected portions of the stored content to differing devices at the same time so that for example audio content can be sent to a headset while at the same time video content can be sent to a screen. This particular system is intended for use with multiple devices accessing related content of the same file at the same time to provide the user with a complete experience. Repurposing of individual content is not considered,

US2002/0016818 discloses an email conversion system which repurposes the email content to suit the receiving device, in particular where wireless transmission of content is required. Any attachments to an email are suitably converted to a format capable of being displayed by the receiving device. The content may also be stored at a suitable repository and accessed via a URL which may be transmitted in lieu of the actual or converted content or in addition thereto.

In some circumstances, while viewing content on one device, a user wishes to transfer to viewing (for example) on another device, Currently this involves the second device accessing the same file location as the first and then the user scanning through the received file to reach the same point in the file as was previously being viewed. This may be inconvenient particularly where the content is long and the user may be a considerable way through.

According to the present invention there is provided a method of controlling transfer of content between terminal devices comprising the steps of obtaining metadata on a first device, said metadata determining content to be used;
accessing the content for transmission to the first device by a server;
transferring metadata from the first device to a second device, said metadata determining related content; and
the second device accessing the server to obtain related content for transmission to the second device.

Alternatively, the first device may obtain from the second device a network address of the second device and may transfer that network address information to the server, the server then transmitting related server content to the second device under the control of the first device.

Preferably the second device is capable of being controlled by the first device, or, in the alternative, the first device transmitting control signals to the server to control the operation of the second device.

Content may be directly related to the content previously being used by the first device, for example while accessing video content on the first device, accessing the same content on the second device, the server transmitting appropriately formatted content to the second device commencing at the same point as the first device had reached.

Alternatively, the content may be related indirectly, for example using the display of a still image on the first device to link to video content on the second device.

Once transferring content from the first device to the second device, the first device may return the content to itself continuing from the point at which the second device has reached.

If both devices are in two-way communication with the server, control signalling (pause, playback, fast forward, rewind, transfer etc) may be sent from either device to the server to control the display on the second device.

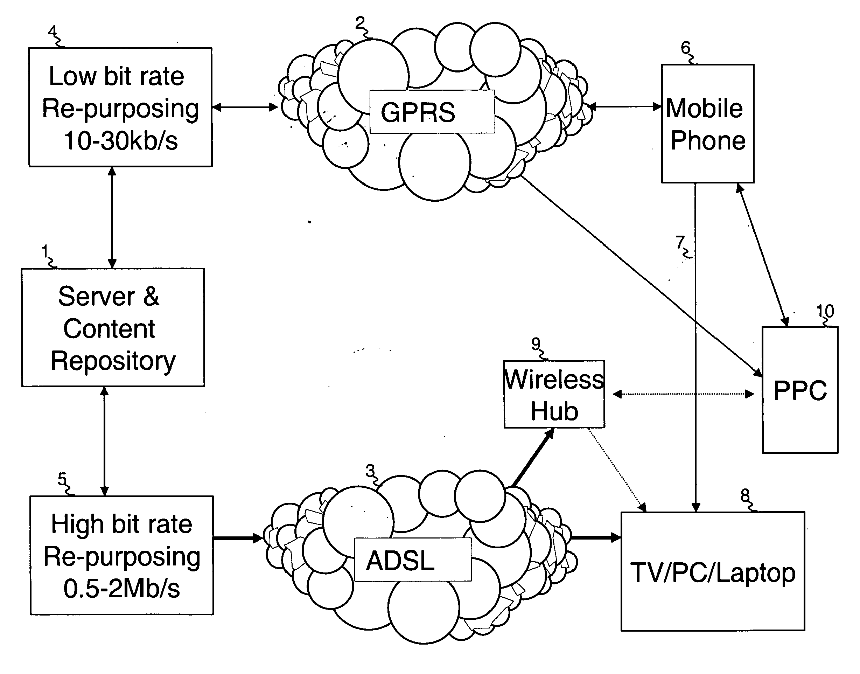

A system for the storage and repurposing of content and a method in accordance with the invention will now be described by way of example only with reference to the accompanying drawing which shows a block schematic diagram of the system.

Referring to the drawing, a server 1 stores, or has access to distributed stores, of displayable content. Such content may be video and or still images and may include descriptive text material. The server 1 will be capable of passing data files (streaming) by way of GPRS (mobile network) 2 and the Internet for example (ADSL) 3 for display on different device types, each of which will have its own display capability and network availability. Although specifically mentioned herein, GPRS and ADSL networks are not the only types of network to which the invention could be applied, for example a dial up modem connection could be used for lower speed transfer of data to some types of fixed terminal, or wireless LAN (WiFi) for transmission to other mobile terminal.

Different types of terminal and network are allowed for by including re-purposing software in or associated with the server 1, two re-purposing programs being shown for low bit rate re-purposing 4 interfacing with the GPRS network 2 and for high bit rate re-purposing 5 interfacing to the ADSL network 3.

Although the present invention is described as re-purposing content "on the fly", that is as content is requested, it is possible that re-purposed content could be stored in the repository as an associated set of files for transmission to appropriate end devices.

Within the server 1 and its associated content repositories, each piece of content may have associated content of other types. Thus a still image may be related to a video, or to a photo album, or text may be related to still images, video or a photo album for example. In the case of a text file, parts of the file may relate to particular parts of a video or a particular photo image within a photo album file with metadata being associated with those parts related to each other.

Now, if a user of a mobile phone 6 (or iPod) is viewing a movie on a low resolution screen using signalling streamed by way of a GPRS network, using (say) Bluetooth signalling 7, the user may transfer data to another device 8, which may be a television, personal computer or laptop computer for example, the phone 6 transferring metadata which defines the content location and in the case of video, additional metadata (embedded within the movie file) which defines the actual viewing point in the file and authentication information. The other device 8 may now access the server 1 by way of the ADSL network 3 and commence display from the point at which the streaming to the mobile phone 6 ceases.

One benefit of the invention is that , for example, the Sim card (or other initial log on info... username password etc.) on the mobile device may be used as a means of authentication so that when the session is transferred, the log on information is transferred too. Accordingly the user does not need the 2^{nd} device to explicitly log on.

Transferred authentication information may of course be encrypted for security so that when information is transferred between the first and second devices, the authentication remains with the first device. Thus if for example transferring from a mobile phone to a television produces a pay per view acceptance message, the authentication can be completed for billing purposes.

The user may now continue to watch the video display on higher resolution display without having to scan for location within the video, or manually authenticate. However, in order to control viewing of the image, the server 1 links the mobile phone 6 and the static device 8 within its own memory so that any control signals received from the mobile device 6 control the display on the static device 8.

Alternatively or additionally, control signals received from the static device 8 may also control the streaming of data files to that device. In this case in addition to using (for example) a remote control unit associated with the static device, Bluetooth communication (or infra red communication) between the mobile device 6 and the static device 8 may be used to send control signals by way of the static device.

The invention will of course perform in the alternative direction in that when streaming high bit rate data files from the content repository 1 to the static device 8 by way of the ADSL network 3, metadata capture by the mobile device may be used to resume (or start) viewing on the mobile device 6 by way of low bit rate re-purposing 4 and the mobile phone (GPRS) network 2.

While the above discussion has centred on use of the invention in viewing conventional video streams, further developments of the system link types of content in accordance with access capability and terminal types. In one example, an advertising link to a mobile phone 6 could comprise a static image, or a limited clip, which on transfer to a more capable static device such as a television may link to a movie or a live match report. Say a football match is being played and a mobile phone user has chosen to receive an alert when a goal is scored, using the picture or notifying text and associated metadata could allow the user to select a clip of the actual game around the goal to be played on the television or indeed a complete current match report on radio or PC. In the latter case of a PC having metadata transferred to it which defines the viewing characteristic an interactive session may be started allowing highlights or other features of the match to be selected.

In the case of a static image linked to a movie, on transfer of the metadata relating to the image (which may be one of several which could be transmitted relating to the same movie) to a television or other larger ADSL viewing device, a pay per view invitation may be screened which the user could accept for billing either through interaction between the server and the static device 8 or by interaction between the server 1 and the mobile device 6.

Alternatively to the Bluetooth (or infrared) transmission of details SIP may be used via the internet. Transferring the session, authentication, session details and current position are all transferred to the receiving device which may then communicate with the server to request the stream. As previously when streaming commences to the static device, the mobile device may still control the receiving device.

Content stored in the server/content repository 1 is not restricted to visual content but may include music, audio clips, text and other data files which may be interlinked as hereinbefore described such that a soundtrack for example may be linked to video content or to a text report. Particularly here for example an audio clip news report may link to a video news report of the same event for display on television or PC and/or to an interactive news screen.

Although we have discussed the invention in relation to transfer of content reception between a static and a mobile device, it should be realised that content transfer between mobile devices is also possible. For example a PPC or PDA 10 linked to a wireless Hub 9 could receive signals from a mobile phone 6 and hence communicate with the server 1 to receive the related content.

## Claims

1. A method of controlling transfer of content between terminal devices comprising the steps of obtaining metadata on a first device, said metadata determining content to be used accessing the content for transmission to the first device by a server;
transferring metadata from the first device to a second device, said metadata determining related content; and
the second device accessing the server to obtain related content for transmission to the second device.

2. A method of controlling transfer of content between terminal devices comprising the steps of obtaining metadata on a first device, said metadata determining content to be used;
accessing the content for transmission to the first device by a server;
the first device obtaining from a second device a network address of the second device and transferring that network address information to the server, the server then transmitting related server content to the second device under the control of the first device.

3. A method of controlling transfer of content between terminal devices as claimed in claim 1 or claim 2 in which the second device is controlled by the first device.

4. A method of controlling transfer of content between terminal devices as claimed in claim 1 or claim 2 in which the first device transmits control signals to the server to control the operation of the second device.

5. A method of controlling transfer of content between terminal devices as claimed in any preceding claim in which content transmitted to the second device is directly related to the content previously being transmitted to the first device.

6. A method of controlling transfer of content between terminal devices as claimed in claim 5 in which metadata associated with the transmission of video content to the first device is used to ensure that on transfer of transmission to the second device, the server transmits appropriately formatted content to the second device commencing at the same point as the first device had reached.

7. A method of controlling transfer of content between terminal devices as claimed in any one of claims 1 to 4 in which the content transmitted to the second device is indirectly linked to the content transmitted to the first device.

8. A method of controlling transfer of content between terminal devices as claimed in any preceding claim in which following transfer of content from the first device to the second device, on transfer of content from the second device to the first device transmission continues from the point at which the second device has reached.

9. A method of controlling transfer of content between terminal devices as claimed in any preceding claim in which the server is responsive to control signalling from either device to control the display on the second device.

10. A method of controlling transfer of content between terminal devices as claimed in any preceding claim in which the metadata defines session information including content location and authentication of user.
